# EUROPEAN PATENT SPECIFICATION

(11) **EP 1 032 281 B1**
(45) Date of publication and mention of the grant of the patent: **18.04.2007**
(21) Application number: 98956144.4
(22) Date of filing: 23.10.1998
(51) Int. Cl.: A23L 3/00, B65B 1/04, A23B 4/015, A23B 4/02, A23B 4/26, A61L 2/03, A61L 2/00, C14C 3/00

(54) **AQUEOUS SOLUTION FOR DISINFECTING AN ANIMAL PRODUCT, A METHOD AND A PLANT FOR SUCH DISINFECTION**
WAESSRIGE LOESUNG ZUM DESINFIZIEREN EINES TIERISCHEN PRODUKTS, EIN VERFAHREN SOWIE EINE ANLAGE FUER EINE SOLCHE DESINFIZIERUNG
SOLUTION AQUEUSE DESTINEE A DESINFECTER UN PRODUIT ANIMAL, PROCEDE ET INSTALLATION DE DESINFECTION

(30) Priority: 23.10.1997 ZA 9709488
(43) Date of publication of application: 06.09.2000
(73) Proprietor: Radical Waters IP (PTY) Ltd, Erasmuskloof 0048 (ZA); Hinze, Gilbert, Theo, Bromhof, Randburg 2194 (ZA)
(72) Inventor: HINZE, Gilbert, Theo, Bromhof, Randburg 2194 (ZA)
(74) Representative: Belcher, Simon James
(86) International application number: PCT/US1998/022370
(87) International publication number: WO 1999/020129

(56) References cited:
- EP-A- 0 219 440
- SU-A- 1 818 163
- US-A- 3 892 640
- US-A- 3 958 020
- US-A- 4 374 714
- US-A- 4 540 616
- US-A- 4 897 278
- US-A- 5 783 052
- DATABASE WPI Section PQ, Week 199439 Derwent Publications Ltd., London, GB; Class P43, AN 1994-315324 XP002162096 & SU 1 818 163 A (KONSTRUKTOR RES PRODN ASSOC), 30 May 1993 (1993-05-30)
- DATABASE WPI Section Ch, Week 198903 Derwent Publications Ltd., London, GB; Class D12, AN 1989-022401 XP002162097 & SU 1 409 190 A (EST AGRIC ACAD), 15 July 1988 (1988-07-15)
- PATENT ABSTRACTS OF JAPAN vol. 1995, no. 08, 29 September 1995 (1995-09-29) & JP 07 116664 A (YOSHIMI SANO), 9 May 1995 (1995-05-09)
- PATENT ABSTRACTS OF JAPAN vol. 1998, no. 08, 30 June 1998 (1998-06-30) & JP 10 056956 A (NIPPON SANSO KK), 3 March 1998 (1998-03-03)

## Description

### Field of the Invention:

This invention relates to a composition for disinfecting an animal product, to a method of disinfecting an animal product, to a treatment plant and to an animal product disinfected with such a composition.

### Background to the Invention:

For the purposes of this specification, the term "animal product" should be construed to include within its meaning the carcass or a product obtained from the carcass of an animal, including its skin, coat, hide or feathers and the word "animal" should be construed to include within its meaning sheep, cattle, goats, pigs, chickens, ostriches, fish and the like from which a carcass or a product could be obtained. The Applicant envisages further that the invention will be applicable particularly, but not exclusively, to the treatment of animal products in the form of food and food-related products. Such products include fish, meat and meat-related products such as sausage casings, offal, waste produced in meat-producing plants such as fisheries, abattoirs and the like. It is also envisaged that treatment would result in shelf life extension through decontamination of the various products.

### Object of the Invention :

It is accordingly an object of the invention to provide a novel composition for disinfecting animal products as well as the related animal products and method.

In accordance with a first aspect of the invention there is provided a method of disinfecting an animal product, the method comprising the steps of producing electrochemically activated bactericidal aqueous anolyte and catholyte solutions with an electrochemical reactor, wherein the electrochemical reactor includes a through flow, electrochemical cell having two co-axial cylindrical electrodes with a co-axial diaphragm between them so as to separate an annular inter electrode space into a cathodic and an anodic chamber, such that the electrochemically activated bactericidal aqueous anolyte and catholyte solutions are produced; separating the aqueous anolyte solution from the aqueous catholyte solution; and exposing the animal product to a composition comprising the electrochemically activated, aqueous anolyte solution.

The solution may be an aqueous solution of a salt. The salt may be sodium chloride. In particular, it may be non-iodated sodium chloride or potassium chloride.

The method may include the steps of diluting the anolyte solution to a pre-determined concentration and exposing the animal product to an appropriate quantity of the diluted anolyte solution and for a predetermined time period in a treatment facility.

If desired, the method may include a preliminary step of washing or rinsing the animal product in a washing vessel prior to treatment in the treatment container. Washing or rinsing may be with water obtained from the said source of water. The method may then include collecting effluent water from the washing vessel, clarifying the effluent water by exposing it to an appropriate quantity of the catholyte solution, disinfecting the clarified water by treating it with an appropriate quantity of the diluted anolyte solution and recirculating the clarified and disinfected water.

The anion-containing solution and the cation-containing solution are produced by an electrochemical reactor or so-called electrolysis device. The electrochemical reactor includes a through flow, electrochemical cell having two co-axial cylindrical electrodes with a coaxial diaphragm between them so as to separate an annular inter-electrode space into a catholic and an anodic chamber. The anion-containing solution is referred to for brevity as the "anolyte solution" and the cation-containing solution is referred to for brevity as the "catholyte solution".

During the electrolysis process, various radical cation and radical anion species are produced. Generally, a 10% aqueous NaCl solution of water is added to tap water where it is electrolysed in the anodic and cathodic chambers to produce radical cation and radical anion species having extremely high redox potentials of between +500 and +1170 mV and about -980 mV respectively. These species may be labile after about 96 hours with no residues so as to disappear being produced.

The anolyte solution generally may have a pH of about 2 to 8 and a redox potential of about +1170 mV. The species present in the anolyte solution may include ClO; ClO⁻; HClO; OH⁻; HO₂⁻; H₂O₂; O₃; S₂O₈²⁻ and Cl₂O₆²⁻

These species have been found to have a synergistic anti-bacterial effect which is generally stronger than that of chemical bactericides and has been found to be particularly effective against viral organisms and spore and cyst forming bacteria.

The catholyte solution generally may have a pH of about 12 to 13. The species present in the catholyte solution may include NaOH; KOH; CA(OH)₂ ; Mg (OH)₂ ; HO⁻ ; H₃O₂⁻ ; HO₂⁻; H₂O₃⁻; O₂⁻; OH⁻ ; O₂²⁻.

Exposing the animal product or carcass to the anolyte solution may include soaking, rinsing or dipping the animal product in the anolyte solution, applying the anolyte solution via an atomising or fogging process or freezing the anolyte solution and using the ice produced to pack the animal product The soaking, rinsing or dipping process is suitable for products such as offal which can be handled with relative ease, either manually or mechanically. The redox potential of the anolyte solution can be monitored during the process so that the disinfecting process can be monitored and controlled on a continuous basis. The atomising or fogging process is suitable for products such as carcasses when suspended in a chiller. The atomising or fogging process may include the step of atomising the anolyte solution into the atmosphere in an enclosure to be treated, forming droplets of between 5 and 100 micrometres. The atomising or fogging process is preferably repeated-at pre-determined intervals so as to maintain a suitable level of anolyte solution concentration in the atmosphere, thus using the optimum microcidal and other properties of the anolyte solution in accordance with the required administration rate. The anolyte solution also may be applied by an atomising process in air ducting systems to destroy air-borne micro-organisms. The use of frozen anolyte solution has been found to extend the usable life of animal products packed in the frozen anolyte solution, e.g. fish.

In accordance with a second aspect of the invention, there is provided a treatment plant for treating an animal product in accordance with the method of the invention, the treatment plant including: supply means for supplying water, feed means for feeding a suitable salt into the water to produce an aqueous salt solution; an electrolysis device for electrolysing the aqueous solution to produce an anolyte and a catholyte solution wherein the electrolysis device includes a through flow, electrochemical cell having two co-axial cylindrical electrodes with a co-axial diaphragm between them so as to separate an annular inter electrode space into a cathodic and an anodic chamber, such that the electrochemically activated bactericidal aqueous anolyte and catholyte solutions are produced; a mixing and dilution tank for mixing and diluting the anolyte solution; and means for applying the anolyte solution to a product.

The treatment plant may include recycling means for recycling anolyte and catholyte solution into spent process water to disinfect the spent process water.

In accordance with a third aspect of the invention there is provided a composition for disinfecting an animal product comprising an electrochemically activated, aqueous anolyte solution.

In accordance with a fourth aspect of the invention there is provided an animal product characterised in having been disinfected by the method of the first aspect of the invention.

In accordance with a fifth aspect of the invention, there is provided an animal product characterised in having been disinfected in the treatment plant of the second aspect of the invention.

In accordance with a sixth aspect of the invention, there is provided an animal product characterised in having been disinfected by the composition of the third aspect of the invention.

### Detailed Description of the Invention:

Preferred embodiments of the invention will now be described by way of an example, with reference to the accompanying schematic drawing illustrating a treatment plant in accordance with the invention, and by way of tests with reference to the tables.

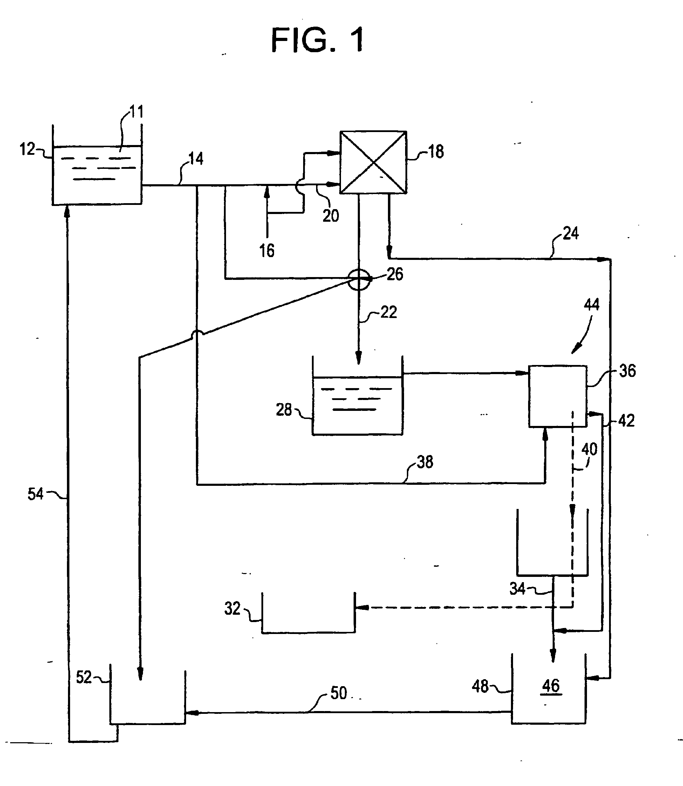

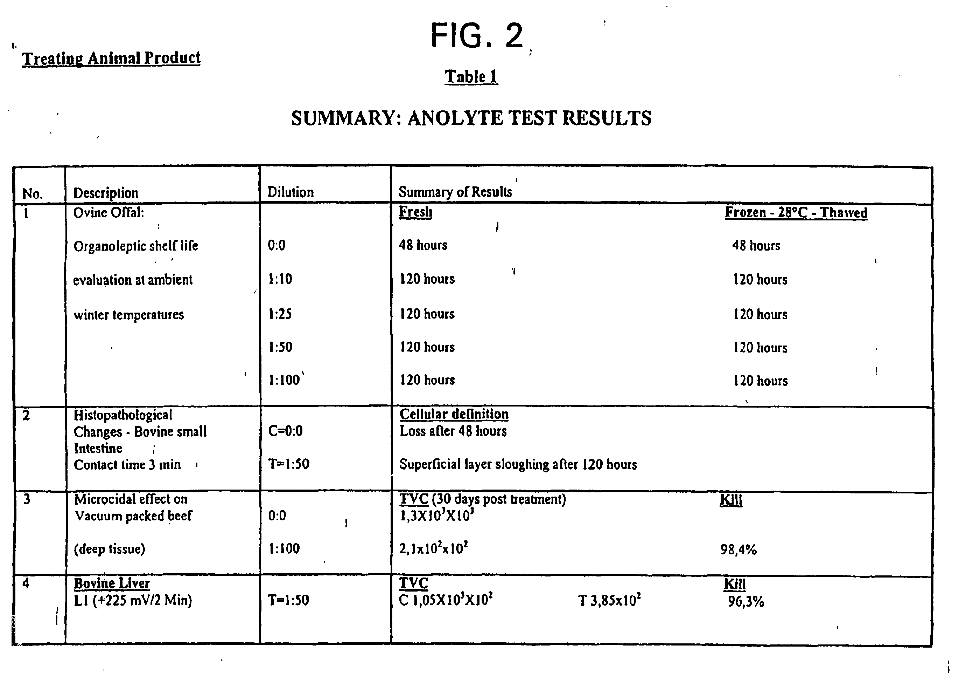

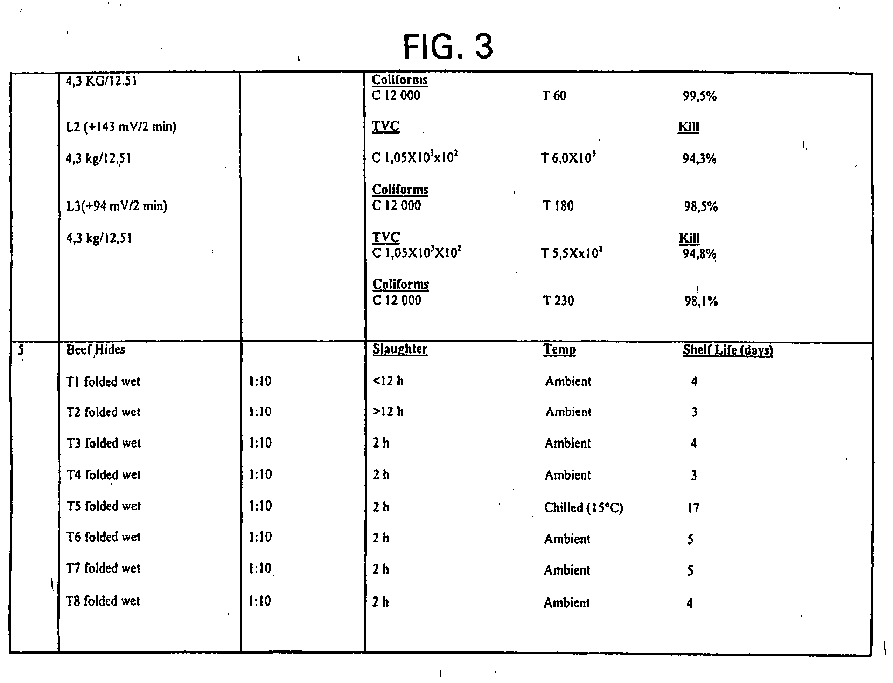

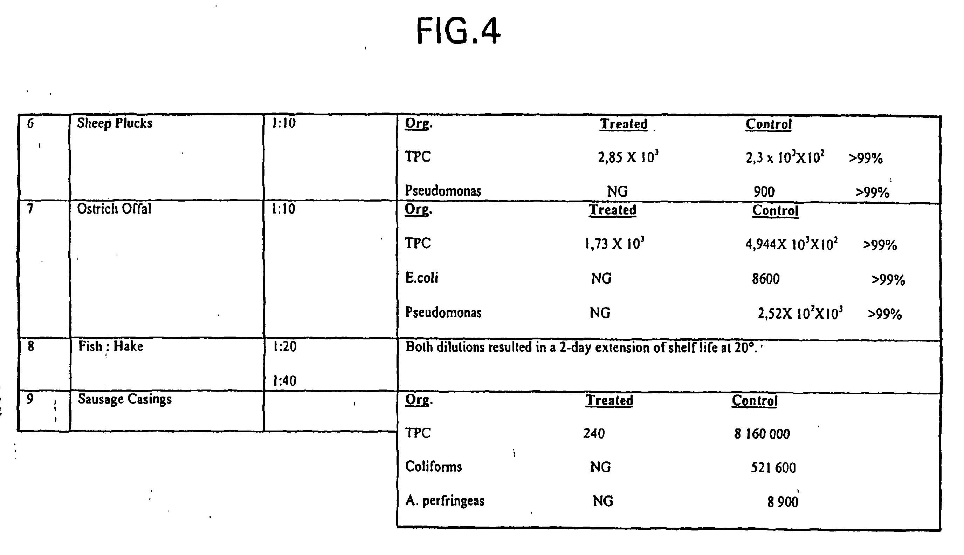

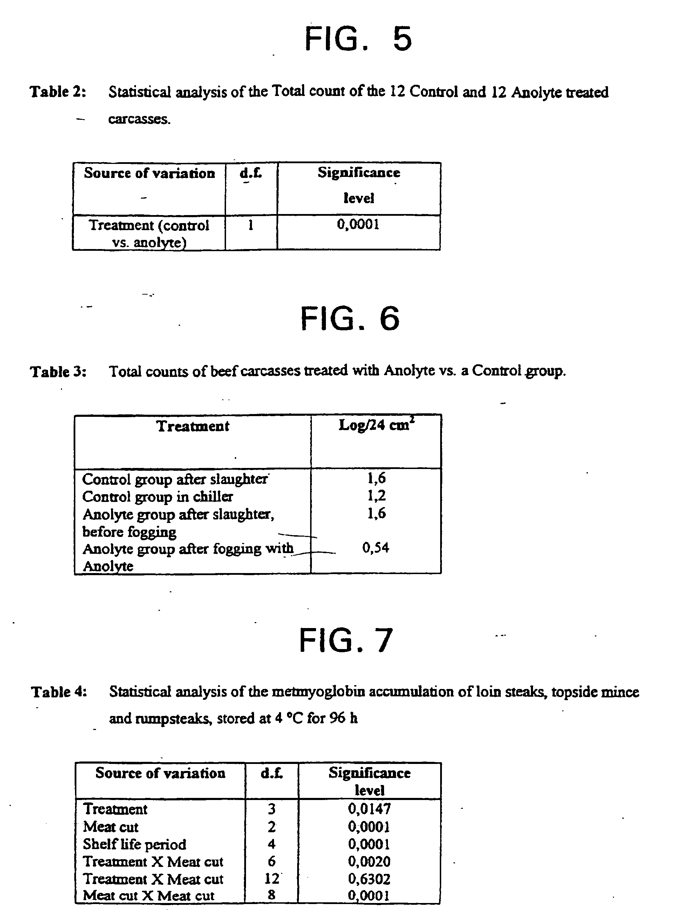

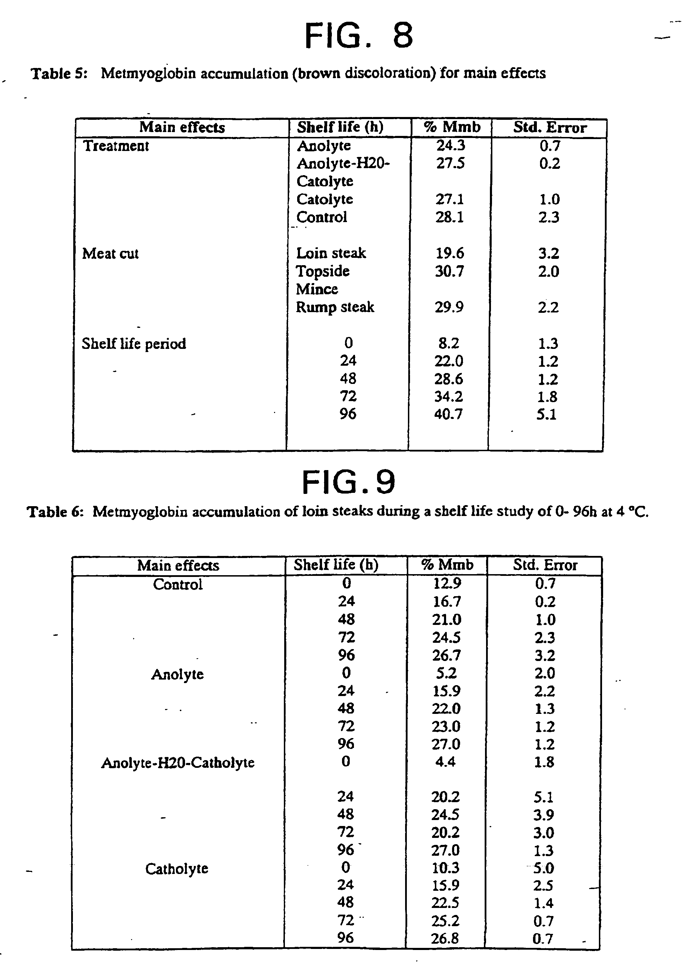

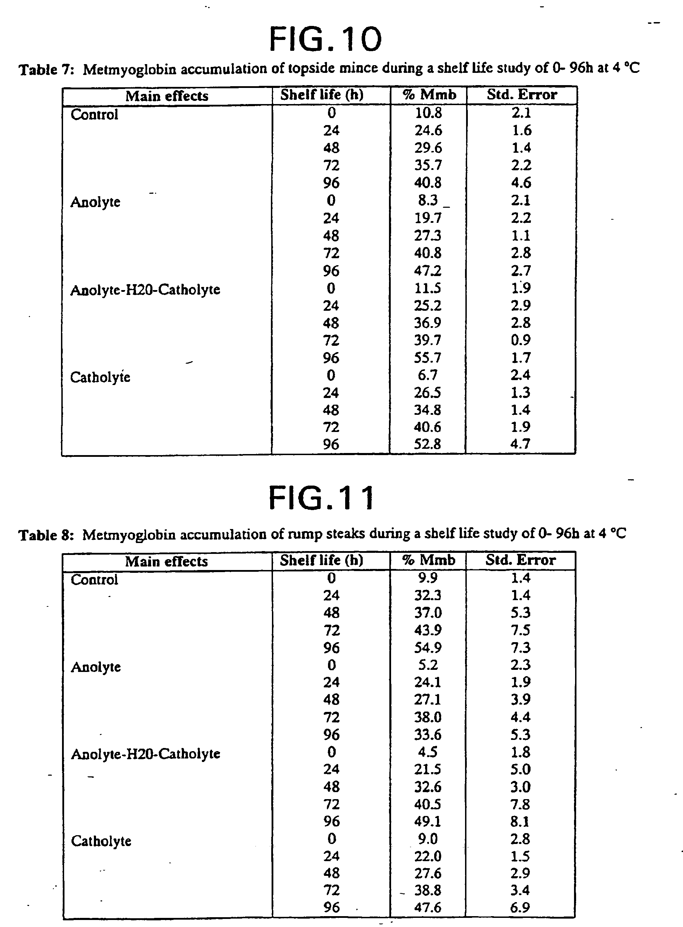

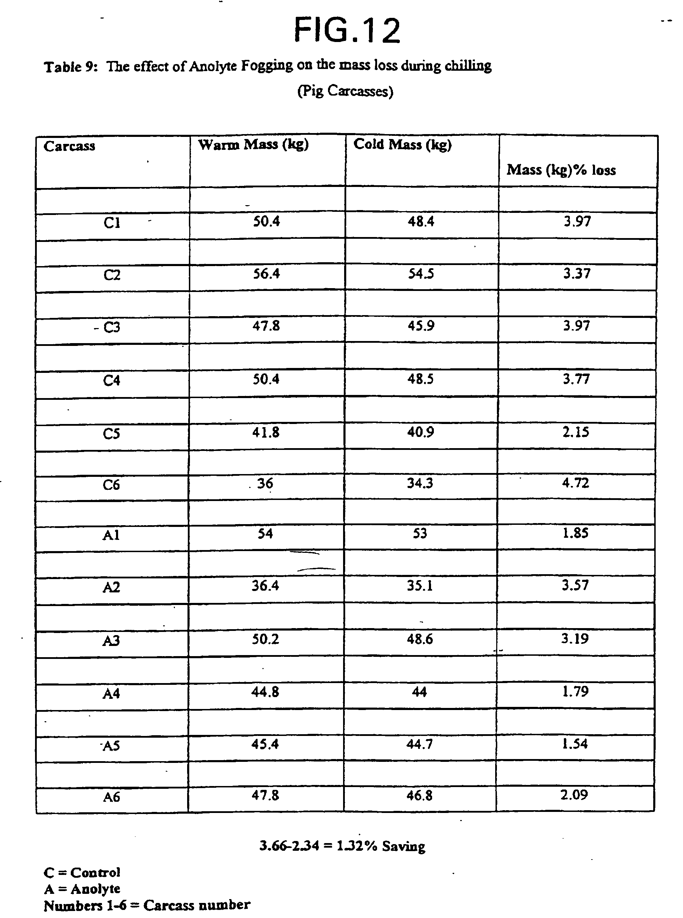

With reference to the drawing, drinking quality water is provided as shown at 11 in a water reservoir 12. If the process and the plant is to be operated with water inferior to drinking quality water, a pre-treatment step may be executed in the water reservoir 12, or in a container upstream of the water reservoir 12 to raise the quality of the water to that of drinking quality water.

A mother line 14 conducts water from the water reservoir 12 to wherever drinking quality water is required in the process as will become apparent hereinafter.

Reference numeral 18 indicates an electrochemical reactor or so-called electrolysis device: Water from the motherline 14 is exposed to sodium chloride as indicated at 16 to produce a sodium chloride solution. The sodium chloride solution is fed into the electrolysis device 18, as well as water from the water reservoir as indicated by reference numeral 20. By electrolysis, an anion-containing solution or anolyte solution is produced as indicated by reference numeral 22. Also a cation-containing solution or catholyte solution is produced as indicated by reference numeral 24.

The anolyte solution at 22 is admixed with water from the motherline in a manifold valve 26 to produce an anolyte solution of predetermined strength which can selectively be directed into an anion mixing tank 28.

Animal product to be treated in accordance with the invention, for example an offal in an abattoir, is introduced into a washing container 36 as indicated by reference numeral 44. In the washing container 36, water is drawn from the motherline 14 as indicated at 38 to wash the animal product. After washing, the animal product is transported as indicated by reference numeral 40 into a treatment container 30. Effluent water is collected from the washing container 36 as indicated by reference numeral 42.

The pre-washed animal product is exposed in the treatment container 30 to an appropriate quantity of the anolyte solution from the mixing tank 28 to disinfect the animal product. The disinfected animal product is transported to a product processing and packaging station 32 where it is further processed. Used solution after disinfection is collected from the treatment container 30 as indicated by reference numeral 34.

The effluent water at 42 and the used solution at 34 are added and are conducted as indicated by reference numeral 46 to a clarification container 48 where it is exposed to an appropriate quantity of the catholyte solution 24 to clarify it by means of flocculation, clarification or the like. The clarified water is conducted as indicated by reference numeral 50 to a disinfecting container 52 where an appropriate quantity of the anolyte solution of predetermined strength is obtained via the manifold valve 26 to produce disinfected water which is re-circulated to the water reservoir 12 as indicated by reference numeral 54.

### Tests

An electrochemical reactor, including a through flow electrochemical cell having coaxial cylindrical electrodes with a coaxial diaphragm between them so as to separate an annular inter electrode space into a cathodic and an anodic chamber, was used to produce anolyte and catholyte for the tests.

### Tests to 1 - 9

In a series of 9 tests, the bactericidal and shelf-life prolonging effect of the anolyte solution was tested on animal products such as offal, meat, fish, hides, etc.. The experimental protocol and the subsequent results are summarised in Table 1 below in which the experiments are numbered from 1 to 9.

In test 4, 3 bovine livers were submerged consecutively for 2 minutes. Redox depletion was measured after each submersion as well as microbiological counts.

### Test 10

A further test was conducted to determine the microbiological quality of beef carcasses after having been fogged with anolyte.

### Treatment

During the test 24 beef carcasses were used, 12 for a control group and 12 for a test group. The 12 carcasses from the control group and the 12 carcasses from the test group were all microbiologically sampled directly after slaughter. After the carcasses had been placed in the respective chillers, the 12 beef carcasses from the test group were fogged with anolyte. All the beef carcasses. (treated and controls) were microbiologically monitored after the fogging process was completed.

### Microbiological sampling

All the carcasses were microbiologically monitored using rodac plates. Samples were taken at 4 positions on both the left and right sides of each carcass i.e. the
- Lateral surface at the 7th and 8th vertebrae;
- Medial side of the hind limb;
- Carcass surface at the breast area of the 7th and 8th rib;
- Proximal part of the neck area; and
- Carcass surface in the perineal region.

After sampling, the rodac plates were incubated at 25°C for 3 days. A total count per 24cm² was then determined.

### Statistical analysis

An ANOVA procedure was used to determine differences statistically between treatments.

A statistical analysis of the total count of the 12 control and 12 test carcasses is shown in Table 2.

A total count of the beef carcasses of both the control and the test group is shown in Table 3.

### Microbiological evaluation

According to the statistical analysis the microbial contamination of the 12 anolyte treated carcasses was significantly lower after fogging than the contamination level of the control carcasses (Table 2:P=0,0001).

Table 3 clearly indicates that the total count of the control group of carcasses vs the test group of carcasses were at a similar levels just after slaughter (log 1,6/24 cm²). However, the total count of the test group was significantly reduced after fogging from log 1,6/24 cm² to log 0,54/24cm². The test group beef carcasses therefore had significantly lower total counts than the control group beef carcasses.

### Test 11-16

A further series of tests were conducted with anolyte aimed at preventing the oxidation of meat. During the trials the following meat cuts were used : beef loin steaks, beef topside mince and chicken drumsticks.

### Treatment

The treatment groups were as follows :
1. Control
2. Anolyte
3. Anolyte-H₂O-Catolyte
4. Catolyte.

All the rump and loin steaks, as well as the chicken drumsticks were submerged into the respective treatment liquids for a period of 3 minutes. The topside mince was treated with a hand held sprayer.

### Shelf life study

After each treatment, all the cuts were singly placed on polystyrene trays and overwrapped with PVC. All the cuts were then placed in retail display cabinets and displayed for a period of 24, 48, 72 and 96 hours at 4°C. After each subsequent display period, cuts from each treatment were analysed for colour.

### Colour

Sceptrophotometric reflectance analyses were used by taking readings from the overwrapped steaks to calculate the percentage of metmyoglobin (MMb), following the procedures of Krywicki (1979).

### Statistical Analysis

ANOVA procedures were used to determine between treatments over time.

A statistical analysis of the metmyoglobin accumulation of loin steaks, topside mince and rump steaks, stored at 4°C for 96 hours, is shown in Table 4.

Metmyoglobin accumulation (brown discoloration) for main effects is shown in Table 5.

Metmyoglobin accumulation of loin stakes during a shelf life study of 0-96h at 4°C is shown in Table 6.

Metmyoglobin accumulation of topside mince during a shelf life study of 0 - 96 h at 4°C is shown in Table 7.

Metmyoglobin accumulation of rump steaks during a shelf life study of 0 - 96 h at 4°C is shown in Table 8.

### Metmyoglobin accumulation (brown discoloration)

According to statistical analysis, all the main effects (treatment, meat cut, shelf life period) were significantly influenced (P valves <0.05) by the accumulation of metmyoglobin (Mmb) (Table 4). Metmyoglobin gives an indication of the brown discoloration, which has taken place on each meat cut.

As shown in Table 5, the samples receiving the anolyte treatment discoloured significantly (P=0,0147) less during the shelf life study than the control samples, the samples receiving the catholyte or combined anolyte-catholyte treatment. Furthermore, the loin cuts discoloured less during the shelf life period than the other two cuts included in the study.

According to a study done by Hood, 1980, a discoloration level of 20% indicates a reduction of 50% in the amount of sales. If a cut off point of ca. 20 - 25% metmyoglobin is taken as the end of retail acceptability, the topside mince treated with anolyte in this trial achieved a 48 hour shelf life. In contract, all the other mince samples treated (control, catholyte anolyte-catholyte combination) only achieved a 24 hour retail shelf life according to this criteria.

If this cut off point of ca 20 - 25% metmyoglobin is again applied to the rump steaks assessed during this trial, the rump steaks treated with anolyte and catholyte in this trial achieved a 48 hour shelf life, while the rump steaks treated with the anolyte-catholyte combinations achieved a 24 hour retail shelf life. In contrast, the control samples were only acceptable on time 0 of study, i.e. a 0 hour retail shelf life, according to this criterion.

### Test 17

A final test was conducted with anolyte aimed at determining the reduction in weight loss in pig carcasses during chilling.

The carcasses were stored at about -3°C in a cold room. An anolyte atmosphere was produced by means of fogging.

The anolyte, generated at a total flowrate of about 750ml/min, had the following characteristics:

| | |
|---|---|
| TDS : | 6,04 g/l |
| pH : | 6-8 |
| ORP : | +762mV |
| Application: | 150 ml/m³ |

The reduction in weight loss during chilling due to anolyte fogging is shown in Table 9. A reduction of 1.32% in weight loss was measured and calculated The treatment of an animal product as described above has been found to extend the shelf life and quality of the product as a result of the anti-microbial action of the anolyte solution.

Treatment of sausage casings for example resulted in a substantial bacterial count reduction.

The Applicant believes that the oxidising free radicals present in the anolyte solution act synergistically at a bacterial cellular level.

It has been found that the effectiveness of the anolyte solution depends upon the flow rate through the reactor which determines the concentration of the anolyte, as measured by the oxidation-reduction potential (ORP), or redox potential of the anolyte solutions, the flow rate through the reactor the exposure time, i.e. the contact time between the contaminated product surface and the anolyte solution and the temperature during application. A flow rate of 750ml/min through a pair of electrochemical cells have been found to be most effective. By measuring the redox potential of the anolyte solution during the treatment, for example, of an animal product, the available free radical concentration can be determined and monitored. Anolyte has been found to be more effective at lower than at higher temperatures and at neutral pH ranges.

## Claims

1. A method of disinfecting an animal product, the method comprising the steps of producing electrochemically activated bactericidal aqueous anolyte (22) and catholyte (24) solutions with an electrochemical reactor (18), wherein the electrochemical reactor includes a through flow, electrochemical cell having two co-axial cylindrical electrodes with a co-axial diaphragm between them so as to separate an annular inter electrode space into a cathodic and an anodic chamber, such that the electrochemically activated bactericidal aqueous anolyte and catholyte solutions are produced; separating the aqueous anolyte solution from the aqueous catholyte solution; and exposing the animal product to a composition comprising the electrochemically activated, aqueous anolyte solution (22).

2. The method as claimed in claim 1, wherein the aqueous solution has a redox potential of between +500 and +1170 mV and pH of about 2 to 8.

3. The method as claimed in claim 1, including at least one of the steps of soaking, rinsing and/or dipping the animal product in the solution; applying the solution via an atomising or fogging process; and/or freezing the solution and using the ice produced to pack the animal product.

4. The method as claimed in claim 3 wherein the atomising or fogging process includes the steps of atomising the solution into the atmosphere at a droplet size of between 5 and 100 micrometers.

5. A treatment plant for treating an animal product in accordance with the method of the invention, the treatment plant including: supply means (12,14) for supplying water; feed means (16) for feeding a suitable salt into the water to produce an aqueous salt solution; an electrolysis device (18) for electrolysing the aqueous solution to produce an anolyte (22) and a catholyte (24) solution wherein the electrolysis device includes a through flow, electrochemical cell having two co-axial cylindrical electrodes with a co-axial diaphragm between them so as to separate an annular inter electrode space into a cathodic and an anodic chamber, such that the electrochemically activated bactericidal aqueous anolyte (22) and catholyte (24) solutions are produced; a mixing and dilution tank (28) for mixing and diluting the anolyte solution (22); and means (30) for applying the anolyte solution (22) to a product.

## Patentansprüche

1. Verfahren des Desinfizierens eines Tierproduktes, wobei das Verfahren die Schritte des Herstellens von elektrochemisch aktivierten bakteriziden wässrigen Anolyt(22)- und Katholyt(24)-Lösungen mit einem elektrochemischen Reaktor (18) umfasst, wobei der elektrochemische Reaktor eine elektrochemische Durchflusszelle mit zwei koaxialen zylindrischen Elektroden aufweist, zwischen denen sich ein koaxiales Diaphragma befindet, um einen ringförmigen Zwischenelektrodenraum in eine Kathoden- und eine Anodenkammer aufzuteilen, so dass die elektrochemisch aktivierten bakteriziden wässrigen Anolyt- und Katholyt-Lösungen hergestellt werden; Trennen der wässrigen Anolyt-Lösung von der wässrigen Katholyt-Lösung und Aussetzen des Tierproduktes einer Zusammensetzung, welche die elektrochemisch aktivierte wässrige Anolyt-Lösung (22) aufweist.

2. Verfahren nach Anspruch 1, wobei die wässrige Lösung ein Redoxpotenzial zwischen +500 und +1170 mV und einen pH-Wert von etwa 2 bis 8 aufweist.

3. Verfahren nach Anspruch 1, das mindestens einen der Schritte des Einweichens, Spülens und/oder Eintauchens des Tierproduktes in der bzw. in die Lösung, des Auftragens der Lösung über einen Atomisierungs- oder Zerstäubungs-Prozess und/oder des Einfrierens der Lösung und der Verwendung des hergestellten Eises zur Verpackung des Tierproduktes umfasst.

4. Verfahren nach Anspruch 3, wobei der Atomisierungs- oder Zerstäubungs-Prozess die Schritte des Atomisierens der Lösung in der Atmosphäre bei einer Tröpfchengröße zwischen 5 und 100 Mikrometer umfasst.

5. Behandlungsanlage zum Behandeln eines Tierproduktes in übereinstimmung mit dem Verfahren der Erfindung, wobei die Anlage umfasst: Zufuhrmittel (12, 14) zum Zuführen von Wasser; Zuleitungsmittel (16) zum Zuleiten eines geeigneten Salzes in das Wasser, um eine wässrige Salzlösung herzustellen, eine Elektrolysevorrichtung (18) zum Elektrolysieren der wässrigen Lösung, um eine Anolyt(22)- und eine Katholyt (24)-Lösung herzustellen, wobei die Elektrolysevorrichtung eine elektrochemische Durchflusszelle mit zwei koaxialen zylindrischen Elektroden aufweist, zwischen denen sich ein koaxiales Diaphragma befindet, um einen ringförmigen Zwischenelektrodenraum in eine Kathoden- und eine Anodenkammer aufzuteilen, so dass die elektrochemisch aktivierten bakteriziden wässrigen Anolyt(22)- und Katholyt (24)-Lösungen hergestellt werden; einen Misch- und Verdünnungstank (28) zum Mischen und Verdünnen der Anolyt-Lösung (22); und Mittel (30) zum Auftragen der Anolyt-Lösung (22) auf ein Produkt.

## Revendications

1. Procédé de désinfection d'un produit animal, le procédé comprenant les étapes consistant à produire des solutions aqueuses bactéricides d'anolyte (22) et de catholyte (24), activées électrochimiquement, avec un réacteur électrochimique (18), le réacteur électrochimique comprenant une cellule d'écoulement électrochimique présentant deux électrodes cylindriques co-axiales avec un diaphragme co-axial entre elles de façon à séparer un espace annulaire entre les électrodes en une chambre cathodique et une chambre anodique de sorte que les solutions aqueuses bactéricides d'anolyte et de catholyte activées électrochimiquement soient produites ; séparer la solution aqueuse d'anolyte de la solution aqueuse de catholyte ; et exposer le produit animal à une composition comprenant la solution d'anolyte (22) aqueuse activée électrochimiquement.

2. Procédé selon la revendication 1, dans lequel la solution aqueuse présente un potentiel redox entre +500 et +1170 mV et un pH d'environ 2 à 8.

3. Procédé selon la revendication 1, comprenant au moins l'une des étapes consistant à imprégner, rincer et/ou tremper le produit animal dans la solution ; appliquer la solution via un processus d'atomisation ou de brumisation ; et/ou congeler la solution et utiliser la glace produite pour empaqueter le produit animal.

4. Procédé selon la revendication 3, dans lequel le procédé d'atomisation ou de brumisation comprend les étapes consistant à atomiser la solution dans l'atmosphère à une taille de gouttelettes entre 5 et 100 microns.

5. Installation de traitement pour traiter un produit animal selon le procédé de l'invention, l'installation de traitement comprenant : des moyens d'approvisionnement (12, 14) pour fournir de l'eau ; des moyens d'alimentation (16) pour apporter un sel approprié dans l'eau pour produire une solution aqueuse saline ; un dispositif d'électrolyse (18) pour effectuer une électrolyse de la solution aqueuse pour produire une solution d'anolyte (22) et une solution de catholyte (24), le dispositif d'électrolyse comprenant une cellule d'écoulement électrochimique présentant deux électrodes cylindriques co-axiales avec un diaphragme co-axial entre elles de façon à séparer un espace annulaire entre les électrodes en une chambre cathodique et une chambre anodique de sorte que les solutions aqueuses bactéricides d'anolyte (22) et de catholyte (24) activées électrochimiquement soient produites ; une cuve de mélange et de dilution (28) pour mélanger et diluer la solution d'anolyte (22) ; et des moyens d'application (30) de la solution d'anolyte (22) à un produit.
